# EUROPEAN PATENT SPECIFICATION

(11) **EP 3 555 935 B1**
(45) Date of publication and mention of the grant of the patent: **05.08.2020**
(21) Application number: 17818329.9
(22) Date of filing: 14.12.2017
(51) Int. Cl.: H01M 2/20, H01M 2/26, H01M 2/30, H01M 2/10, H01M 2/02, H01M 10/30, H01M 4/32

(54) **A BATTERY MODULE CASING, A BATTERY MODULE AND A BATTERY**
BATTERIEMODULGEHÄUSE, BATTERIEMODUL UND BATTERIE
BOÎTIER DE MODULE DE BATTERIE, MODULE DE BATTERIE ET BATTERIE

(30) Priority: 15.12.2016 SE 1651651
(43) Date of publication of application: 23.10.2019
(73) Proprietor: Nilar International AB, 18730 Täby (SE)
(72) Inventor: NORDSTRAND, Andreas, 802 66 Gävle (SE); ERIKSSON, Anders, 804 33 Gävle (SE)
(74) Representative: Zacco Sweden AB
(86) International application number: PCT/SE2017/051276
(87) International publication number: WO 2018/111182

(56) References cited:
- EP-B1- 1 568 089
- EP-B1- 1 953 860
- FR-A3- 2 988 915

## Description

### TECHNICAL FIELD

The present invention relates to a battery module casing according to the preamble of claim 1.

The present invention also relates to a battery module in which at least one battery cell is housed by such a battery module casing and in which the first metal plate forms a positive terminal of the battery and the second metal plate forms a negative terminal of the battery module.

The invention also relates to a battery that comprises one battery module according to the present invention or a stack of at least two battery modules according to the present invention, wherein, in said stack, the second metal plate of a first of said battery modules is turned towards and located opposite to a first metal plate of a second of said battery modules, and that the outermost metal plates of said one battery module or said stack are covered by an electrically isolating element, and that there is provided a clamping element that holds the one battery module or stack of battery modules together.

Typically, but not necessarily, the present invention relates to battery technology in which the at least one battery cell housed by the casing according to the invention is a battery cell of a NiMH-battery.

### BACKGROUND ART

Battery modules in which a plurality of battery cells are housed by a casing and in which the casing comprises a first metal plate that forms a positive terminal and an opposite second metal plate that forms a negative terminal are well known in prior art. Apart from having the function being an electric conductor, the first and second metal plates also have the function of conducting heat generated by the battery cell away from the battery module.

If the battery module is the sole battery module, the first and second metal plates of the battery module form end plates and terminal plates, and heat may primarily be conducted through the respective metal plate in a direction perpendicular to an extension plane of the plate. However, if the metal plate is covered by an electrically isolating element, typically a plastic element, the heat conductivity of that isolating element may restrict the ability of the casing to conduct heat away from the battery cell in said direction. Some heat will also be conducted away in a lateral direction from the periphery of the metal plates, but since the metal plates normally are thin compared to their area in their extension plane, this contribution to the total heat conduction is limited.

If the battery module is one of a plurality of battery modules that together form a battery, then at least one of its metal plates, i.e. its terminals, may be positioned opposed to and in contact with a metal plate of a battery module positioned adjacent said battery module. Then, heat conducted from the plates must be conducted away via the lateral periphery of said plates. This is delimiting to the battery module's heat conduction ability.

WO2007082863 adresses the problem of insufficient heat conduction, and discloses a battery in which battery modules of the battery are separated by electrically conducting elements that define a channel between the terminal plates of neighbouring battery modules while at the same time electrically interconnecting said terminal plates. However, this design results in a high and voluminous battery. Furthermore, with this design it becomes difficult in reality to apply an even pressure between said conducting elements and the respective terminal plates, which is important for the functionality of this kind of batteries.

FR2988915 A3 discloses a module structure for housing lithium-ion battery cells in battery module in e.g. electric vehicle, in which the case is arranged to form spacing between adjacent walls perpendicular to basic wall, where thickness of basic wall is equal to that of cells.

The structure has a case made of extruded aluminium, where the case includes a basic wall and two lateral walls perpendicular to the basic wall. An inner wall is arranged perpendicular to the basic wall. An upper lid closes the case on sides of the lateral walls opposite to the basic wall. The case is arranged such that a spacing is formed between two adjacent walls perpendicular to the basic wall, where thickness of the basic wall is equal to the thickness of lithium-ion battery cells in a flexible envelope.

EP1953860 B1 relates to a secondary battery and a secondary battery manufacturing method, and more particularly, to a structure of a battery in which a winding assembly formed by winding a positive electrode and a negative electrode with a separator interposed there between is received in a battery container along with an electrolyte and in which electricity, which is charged in and discharged from the winding assembly, can be taken from positive and negative electrode terminals to an outside.

EP1568089 B1 relates to a bipolar battery, especially a NiMH battery, having: a sealed housing, a negative end terminal, a positive end terminal, and at least one biplate assembly comprising a biplate, a positive and a negative electrode. A separator is arranged between each negative and positive electrode forming a battery cell, said separator includes an electrolyte. An inner barrier of a hydrophobic material is arranged around at least one electrode, whereby said inner barrier prevents an electrolyte path from one cell to another cell, and a frame is present to provide predetermined cell spacing between each biplate and/or biplate and end terminal. The frame is attached in such a way to each biplate to permit ambient gas to pass between adjacent cells, thereby creating a common gas space for all cells in the battery. The invention also relates to a method for manufacturing a bipolar battery.

It is thus an object to present a battery module casing, a battery module and a battery by means of which the above-mentioned draw-backs are remedied.

### SUMMARY OF THE INVENTION

The object of the present invention is achieved by means of the initially defined battery module casing, wherein at least one first and second metal plates comprises at least one lateral extension that, along at least a part of a periphery of the plate to which it is associated, forms a lateral wall together with said lateral wall element. Said battery module being charachterised in the casing is subdivided in two halves that are interconnected along a partition line, wherein a first one of said halves consists of the first metal plate and a first part of said wall element and the second one of said halves consists of the second metal plate and a second part of said wall element. Thereby, very efficient production of the casing and mounting of the casing can be obtained. Two halves are produced, at least one battery cell is mounted in one of said halves, and, finally, the casing is closed by mounting of the other half and joining it sealingly with the first half.

Said battery module is further charachterised in, and in the first part of the wall element is a polymer moulded onto and enclosing the at least one lateral extension of the first metal plate, and the second part of the wall element is a polymer moulded onto and enclosing the at least one lateral extension of the second metal plate. Said parts extend continuosly around the periphery of the respective metal plate. Thereby, a very tight and sealing connection between the wall element and the lateral extensions of the respective metal plate can be obtained. Preferably, the first part and the second part of the wall element are joined by means of welding (polymer welding). Other possible joining methods may include chemical bonding, gluing, clamping, or any other suitable method.

The lateral extension will thereby form a further surface from which heat may be conducted from said plate and from the battery cell. As a result thereof, heat conduction and cooling of the battery module is improved compared to a corresponding prior art design that does not comprise said lateral extensions. Provided that the at least one lateral extension of the metal plate has a higher mechanical strength than the material of the wall element together with which it forms said lateral wall, the at least one lateral extension will also contribute to an improved mechanical strength of the lateral wall. Thereby, the thickness of the lateral wall element, and the lateral wall itself, can be reduced compared to the case in which there is no lateral extension provided. Alternatively, with a maintained wall thickness, higher wall strength can be achieved, thereby allowing a higher clamping force to be applied on the battery module from outside thereof. The lateral wall element may be constitued by any suitable electrically isolating material, ceramics and porcelain included. However, according to a preferred embodiment, the lateral wall element is constituted by a polymer that has a mechanical strength that is inferior to the one of the metal of the lateral extensions of the metal plate. The lateral extensions thereby function as reinforcing members of the lateral wall.

It should be understood that the at least one lateral extension of the first or second metal plate does not necessarily be made of the same metal sheet as the rest of the plate. The at least one extension could be any kind of metal element that is connected the metal plate, has a different extension plane than the latter and thereby defines said lateral extension. However, according to a preferred embodiment, the at least one lateral extension is formed by folding a metal sheet such that said metal plate and said at least one lateral extension is formed in one piece. Thereby, the at least one lateral extension will have the same thickness and same material properties as the metal plate to which it is associated. Preferably, the first and second metal plates consist of an aluminium alloy, because of its combination of good mechanical strength and good electrical conducting ability. Other possible materials of the metal plate may be steel or other metal alloys that combine high strength with high electric conductivity. The lateral extension may be of a material with lower electric conductivity than the rest of the metal plate to which it is associated, since its primary task is not that of conducting electricity. It may even be preferred that the lateral extension has a lower electric conductivity than the rest of the metal plate to which it is associated. However, preferably, the lateral extension is made of metal, preferably an aluminium alloy or steel.

According to one embodiment, said at least one lateral extension extends along at least 10%, preferably at least 25% of the length of said periphery of said first or second metal plate to which it is associated. Thereby, a remarkably improved heat conduction is achieved compared to cases in which there are no or only very short sections of lateral extensions along the periphery of the metal plate. According to one embodiment said at least one lateral extension extends along more than 75% of the length of said periphery of said first or second metal plate to which it is associated. Cooling channels for conduction of a cooling medium therein may be provided in the lateral wall element, thereby further improving the ability of the battery module casing to conduct heat away from the battery module. The provision of cooling channels for such active cooling of the battery module is particularly useful if said at least one lateral extension extends along less than 25% of the length of the periphery of the metal plate to which it is associated. Preferably, the cooling channels are located opposite to and close to said at least one lateral extension.

According to one embodiment, there is provided a plurality of lateral extensions and said lateral extensions are evenly distributed along said periphery of said first or second metal plate to which they are associated. The term "evenly" should be understood in a wide sense. It does not mean that there must be exactly the same distances between individual lateral extensions along the periphery of a metal plate, or that each lateral extension must have exactly the same length. However, a certain balancing of the improved heat conductivity, as well as the mechanical reinforcement of the lateral wall, is thereby to be obtained. Preferably, provided that the metal plate presents a polygonal shape (as seen from above), there is provided at least one lateral extension at each side of the polygon defined by the metal plate. According to one embodiment, the metal plate has a rectangular geometry, and there is provided lateral extensions on each side of the rectangle. The lateral extensions are then evenly distributed in the sense that longer sides are provided with correspondingly longer total length of lateral extensions than the shorter sides.

According to one embodiment, the lateral wall has a total lateral area Atot and said at least one lateral extension (all the lateral extensions of one metal plate) extends over a lateral area A1, which is at least 10% of the total lateral area Atot of the lateral wall. The mere provision of at least one lateral extension that extends along a very large part of the periphery of the metal plate will not contribute substantially to an improved heat conductivity and mechanical reinforcement of the lateral wall unless the lateral extension has sufficient width, that results in a predetermined area thereby being covered by the at least one lateral extension. 10% coverage will make a substantial contribution, in particular if both metal plates have lateral extensions that each cover 10% of the area of the lateral wall, i.e. 20% coverage in total. According to further embodiments, said at least one lateral extension (of at least one of the metal plates) extends over a lateral area A1, which is at least 20% of the lateral area Atot of the lateral wall. According to yet another embodiment, the lateral area A1 is at least 40% of the lateral area Atot, meaning that, if both metal plates have corresponding lateral extensions, the lateral extensions will cover at least 80% of the total lateral area Atot of the lateral wall.

According to one embodiment, the first metal plate is provided with at least one lateral extension as defined hereinabove or hereinafter, and the second metal plate is provided with at least one lateral extension as defined hereinabove or hereinafter. Thereby, an improved total heat conduction as well as mechanical reinforcement of the lateral wall is achieved.

According to one embodiment, the lateral area A1 of the at least one lateral extension of the first metal plate corresponds to the lateral area A1 of the at least one lateral extension of the second metal plate. Thereby, equal improvements of heat conductivity may be obtained for the first metal plate and the second metal plate.

According to one embodiment, the first metal plate and the at least one lateral extension thereof have same shape and size as the second metal plate and the at least one lateral extension thereof. Thereby, equal improvements of heat conductivity and mechanical reinforcements are achieved on opposite sides of the casing, and one common metal plate design may be used for both metal plates, thereby improving production efficiency.

According to one embodiment, the at least one lateral extension of the first plate extends with a constant width long the periphery of the first metal plate, and the at least one lateral extension of the second plate extends with a constant width along the periphery of the second metal plate, and the lateral extension of the first metal plate presents a free end which is located opposite to a free and of the lateral extension of the second metal plate, and these free ends are divided by a section of said wall element. Said section of the wall element may then form a band around the periphery of the casing that acts as an electric isolation between the lateral extensions of the respective metal plate.

According to one embodiment, a plurality of lateral extensions extend from the first metal plate along the periphery thereof, and a corresponding plurality of lateral extensions extend from the second metal plate along the periphery thereof, and the lateral extensions of the first metal plate are displaced in peripheral direction relative the lateral extensions of the second metal plate and the lateral extensions of the first metal plate extend in between the lateral extensions of second metal plate in said lateral wall. Thereby, the mechanical strength of the lateral wall can be further improved.

According to one embodiment, said at least one lateral extension is provided with a least one through hole. In particular, the provision of through holes in the lateral extensions is advantageous when the wall element is a polymer that is moulded onto the lateral extensions on both sides of the latter and thereby enclosing the latter (which is a preferred aspect of the present invention). The provision of through holes will then improve the adhesion of the wall element to the lateral extensions. Preferably, a plurality of through holes are therefore provided in the at least one lateral extension associated with a respective metal plate. It is preferred that the through holes are circular or oval holes, although other geometries are also conceivable. The through holes should not be too small in order to result in the requested adhesion and to be filled with the polymer. On the other hand, they should not be too big, since that would reduce the heat conduction and mechanical reinforcement of the lateral extensions. Preferably, each hole should have a diameter larger than 0.1 cm, but not larger than 1.5 cm, and the total area of said holes provided in the at least one lateral extension of one metal plate may be in the range of 0.05 x A1 to 0.3 x A1.

The invention also relates to a battery module comprising at least one battery cell and characterised in that the at least one battery cell is housed in a battery module casing as defined hereinabove or hereinafter, and that the first metal plate forms a positive terminal of the battery module and the second metal plate forms a negative terminal of the battery module. The at least one battery cell may be of any type, but according to one particular embodiment, it is of a bipolar type.

The invention also relates to a battery characterised in that it comprises one battery module according to the present invention or a stack of at least two battery modules according to the present invention, wherein, in said stack, the second metal plate of a first of said battery modules is turned towards and located opposite to a first metal plate of a second of said battery modules, and that the outermost metal plates of said one battery module or said stack are covered by an electrically isolating element, and that there is provided a clamping element that holds the one battery module or stack of battery modules together.. If there are a plurality of battery modules that are connected in series, the second metal plate of a first of said battery modules is in direct with a first metal plate of a second of said battery modules. If, on the other hand, the battery modules are connected in parallel, the second metal plate of a first of said battery modules separated by an electrically isolating sheet from a neighbouring first metal plate of a second of said battery modules. The clamping element may be any clamping element suitable for the purpose. According to one embodiment, the clamping element is one or more straps wound around the battery module or stack of battery modules.

Further features and advantages of the present invention will be presented the following detailed description of embodiments.

### BRIEF DESCRIPTION OF THE DRAWINGS

Exemplifying embodiments of the invention will hereinafter be described more in detail with reference to the annexed drawing, on which:
Fig. 1 is a partially cut perspective view of a battery module casing according to the invention,
Fig. 2 is a view from above of a battery module according to the invention, comprising a battery module casing according to fig. 1,
Fig. 3 is a cross section according to A-A in fig. 2,
Fig. 4 is a perspective view of a metal plate according to one embodiment of the invention,
Fig. 5 is a partially cut perspective view of an alternative embodiment of a battery module casing according to the invention,
Fig. 6 is a partially cut perspective view of another alternative embodiment of a battery module casing according to the invention,
Fig. 7 is a partially cut perspective view of a battery according to the invention,
Fig. 8 is a view from above of the battery shown in fig. 7,

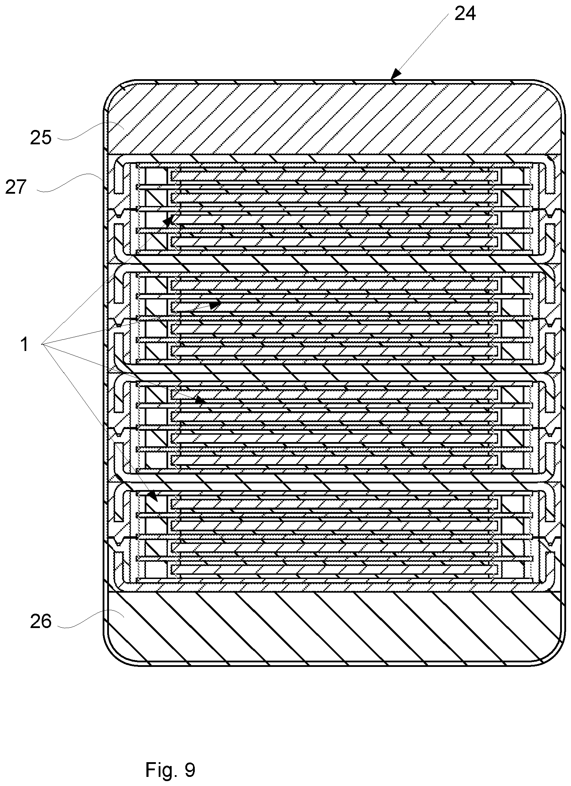

Fig. 9 is cross section according to A-A in fig. 8,
Fig. 10 is a partially cut perspective view of a further embodiment of a battery module casing and,
Fig. 11 is a cross section of the battery module casing shown in fig. 10.

### DETAILED DESCRIPTION

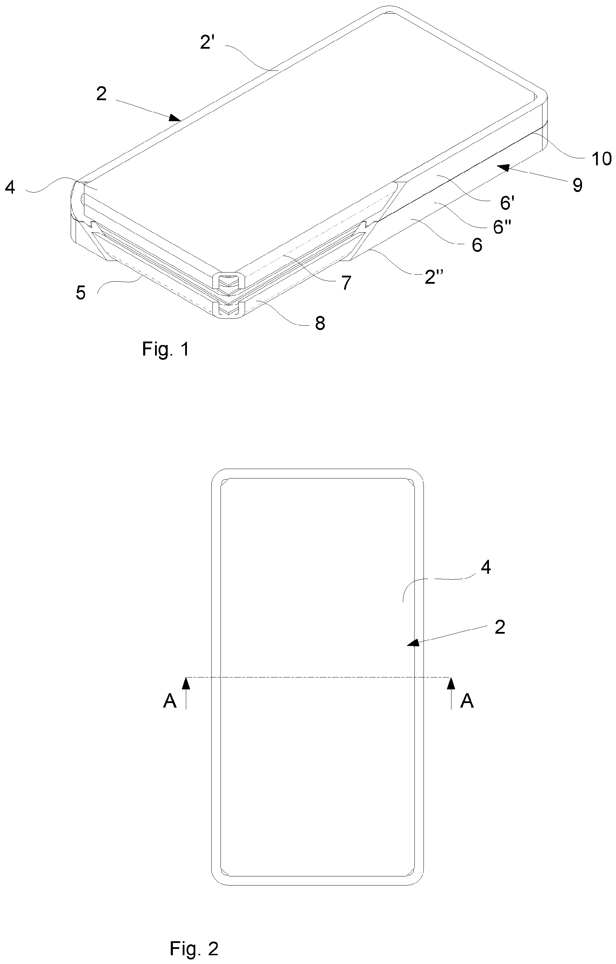

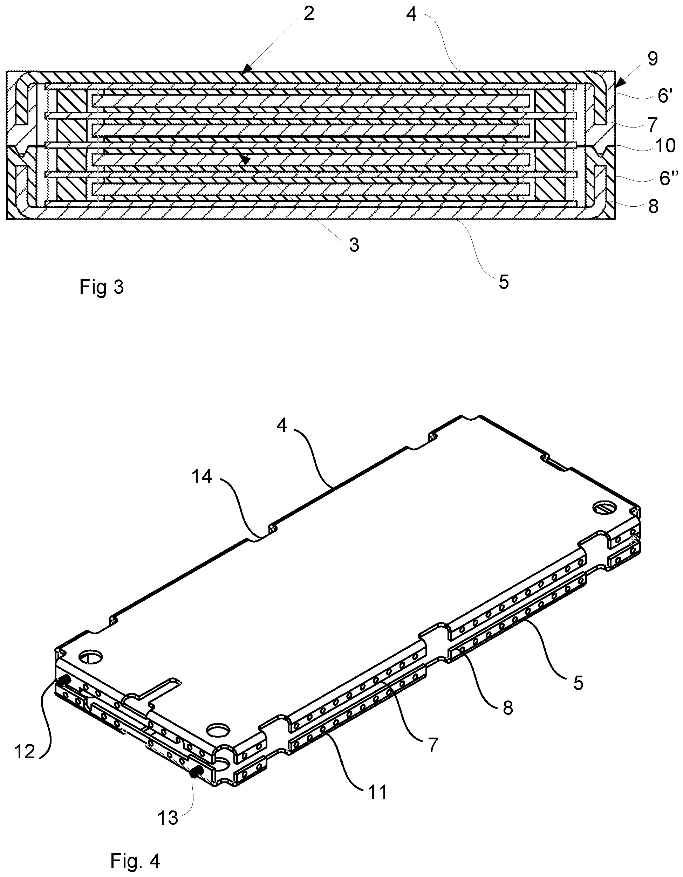

Reference is made to figs. 1 to 3. Fig. 1 shows a battery module casing according to an embodiment while figs. 2 and 3 show a battery module comprising the battery module casing shown in fig. 1. The battery module 1 comprises the battery module casing 2 which is configured to house at least one battery cell 3, said battery module casing 2 comprising a first metal plate 4, configured to form a positive terminal of the battery module 1 and to be positioned on a first side of said at least one battery cell 3, a second metal plate 5, configured to form a negative terminal of the battery module 1 and to be positioned on an opposite second side of said at least one battery cell 3, and a lateral wall element 6 configured to extend around a lateral periphery of said at least one battery cell 3, wherein the lateral wall element 6 is located between said first metal plate 4 and said second metal plate 5, and wherein said lateral wall element 6 comprises an electrically isolating material and is sealingly attached to the first metal plate 4 and to the second metal plate 5 respectively. "Sealingly attached" is referred to as being able of preventing gas or liquid from escaping into or out of a battery module through the interface between the metal plates 4, 5 and the lateral wall element 6. Such sealing effect can be achieved by overmoulding the perhiphery of the metal plates 4, 5and their lateral extensions 7, 8 with the material that forms the lateral wall element 6. The battery cell 3 is a bipolar NiMH battery cell, but other battery cell types are also conceivable, such as cylindrical cells, lithium ion cells etc.. The first and second metal plates 4, 5 are of identical rectangular shape and size, and are made of an aluminium alloy. The lateral wall element 6 is made of polymer, here poly carbonate and ABS.

Reference is also made to fig. 4, which shows the first and second metal plates in isolation. Along a lateral periphery of each of the first and second metal plates 4, 5 there is provided a plurality of lateral extensions 7, 8, that form a lateral wall 9 together with said lateral wall element 6. There are provided lateral extensions 7, 8 on all four sides of each rectangular metal plate 4, 5. The lateral extensions 7, 8 are formed by folding a metal sheet that forms the respective metal plate 4, 5. The first and second metal plates 4, 5 are generally flat, and the lateral extensions 7, 8 thereof extend in a direction generally perpendicular to a main extension plane of the respective metal plate 4, 5. On each metal plate 4, 5, in this specific embodiment, the lateral extensions 7, 8 extend along approximately 80% of the length of the periphery of the respective metal plate 4, 5. In corners of the polygon, here the rectangle, defined by the respective metal plate 4, 5 there is no lateral extension provided. The lateral extensions 7, 8 of each the first and second metal plate respectively have approximately the same width along their peripheral extension (width being measured in a direction from the first metal plate to the second metal plate or vice versa). Furthermore, the lateral extensions 7 associated to the first metal plate 4 have the same width as the lateral extensions 8 associated to the second metal plate. The lateral extensions 7 of the first metal plate 4 presents a free end which is located opposite to a free and of the lateral extensions 8 of the second metal plate 5, and these free ends are divided by a section of said wall element 9.

The lateral extensions 7, 8 of each metal plate 4, 5 covers a lateral area A1, which is approximately 15% of the total lateral area Atot of the lateral wall 9. Together, they cover approximately 30% of the total lateral area Atot of the lateral wall 9.

The battery module casing 2 is subdivided in two halves 2', 2"that are interconnected along a partition line 10, wherein a first one 2' of said halves consists of the first metal plate 4 and a first part 6' of said wall element 6 and the second one 2" of said halves consists of the second metal plate 5 and a second part 6" of said wall element 6.

The first part 6' of the wall element 6 is moulded onto and encloses the lateral extensions 7 of the first metal plate 4, and the second part 6" of the wall element 6 is moulded onto and encloses the lateral extensions 8 of the second metal plate 5. Preferably, the first and second parts 6', 6" of the wall element 6 also cover rims of the respective metal plate that are not provided with a lateral extension, and they extend continuously around the whole periphery fo each metal plate 4, 5. After positioning of the battery cells 3 in one of the halves 2', 2" thus formed, the first and second parts 6', 6" of the wall element 6 are sealingly joined at the partition line 10 by means of a polymer weld joint.

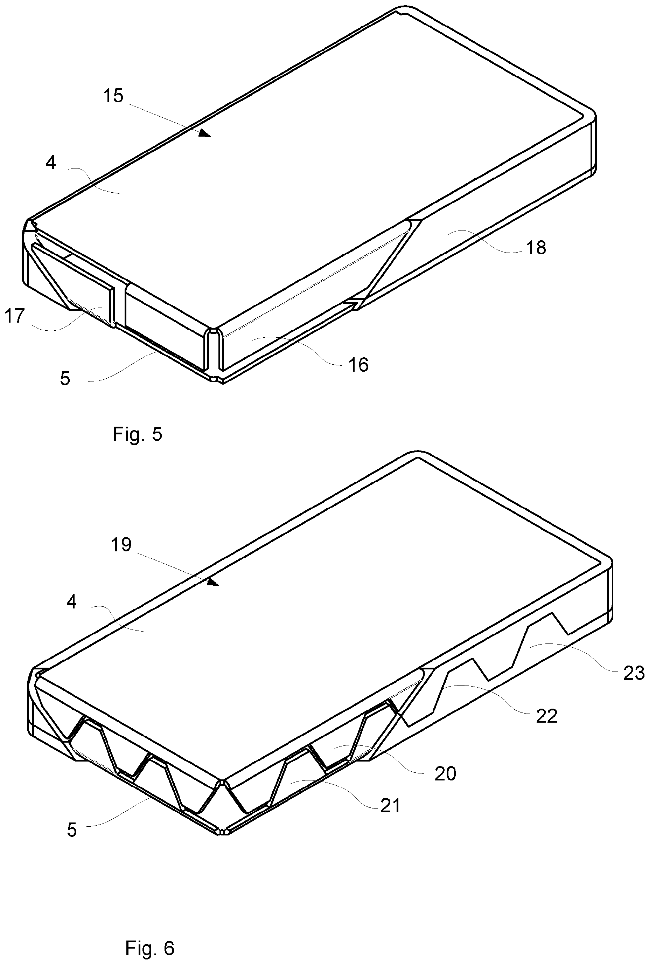

In order to improve the strength of the first and second parts 6', 6" of the lateral wall 6 and to improve their adhesion to the respective lateral extensions 7, 8, there are provided through holes 11 in the lateral extensions 7, 8 (see fig. 4). Though these through holes 11 have not been drawn in figs. 1-3, it should be understood that they are preferably included in the embodiment shown in fig. 1-3, as well as in the alternative embodiments shown in figs. 5 and 6. The through holes 11 are filled with the polymer material of the wall element 6 as a result of the moulding thereof onto the lateral extensions 7, 8. The through holes 11 have a circular geometry with a diameter of approximately 0.25 cm. They are evenly distributed on the surface of the lateral extensions 7, 8 and, on the lateral extensions 7, 8 of each respective metal plate 4, 5, they cover an area which is approximately 0.1 x A1.

As can be seen in fig. 4, a first electric connector element 12 is provided on the lateral extension 7 of the first metal plate 4, and a second electric connector element 13 is provided on the lateral extension 8 of the second metal plate 5. As can also be seen in fig. 4, there are provided sections 14 at which the first and second metal plates 4, 5 are free from lateral extensions thereof. The reason for this provision is, in this case, that recesses for clamping elements formed by straps to be wound around the battery or a battery module are provided for. Accordingly, these recesses 14 may be refrained from if found suitable, and if a continuous lateral extension is preferred along the sides of the metal plate.

Fig. 5 shows an alternative embodiment of the battery module casing in which the battery module casing, here denoted 15, comprises a plurality of lateral extensions 16 that extend from the first metal plate 4 along the periphery thereof, and a corresponding plurality of lateral extensions 17 that extend from the second metal plate 5 along the periphery thereof, wherein the lateral extensions 16 of the first metal plate 4 are displaced in peripheral direction relative the lateral extensions 17 of the second metal plate 5 and wherein the lateral extensions 16 of the first metal plate 4 extend in between the lateral extensions 17 of second metal plate 5 in the lateral wall 18. The lateral extensions 16, 17 should have equal length and should have a width which is at least half the width of the lateral wall 18 (width = distance in a direction from first metal plate 4 to second metal plate 5), preferably at least 80 % of the width of the lateral wall 18. Accordingly, there is an overlap of the lateral extensions 16, 17. The contour of the respective half of the casing will follow the contour of the respective metal plate with its lateral extensions and the partition line will have a tooth-like extension. The casing is formed by separate halves as disclosed in the embodiment shown in figs. 1-3 and these halves are preferably formed by moulding in the same way as disclosed with reference to that embodiment, and by use of the same type of materials. As in previous embodiments, the lateral extensions 16, 17 are separated by an electrically isolating section of the polymer lateral wall element together with which they form the lateral wall 18.

Fig. 6 is a further alternative embodiment of a casing, here denoted 19, which differs from the one shown in fig. 5 in the design of and number lateral extensions. Between each pair of lateral extensions 20 of the first metal plate 4, there is one lateral extension 21 of the second metal plate 5 (with exclusion of the corner regions). Each lateral extension 20, 21 has a contour of a truncated cone with its broad base attached to the metal plate to which it is associated and its tip directed towards the opposite metal plate. The casing 19 is subdivided in halves which are attached to each other along the partition line 22, and the partition line follows the contour of the interlocking lateral extensions 20, 21. The lateral extensions 20, 21 may alternatively be defined as having a corrugated contour. As in previous embodiments a lateral wall element forms the lateral wall (here denoted 23) together with the lateral extensions. As in previous embodiments the lateral wall element is formed by moulding a polymer onto the lateral extensions and onto rims (free of lateral extensions) of the respective metal plates, whereinafter battery cells are placed in one of the halves thereby formed, and the two halves are joined along the partition line 22, such that a battery module is formed.

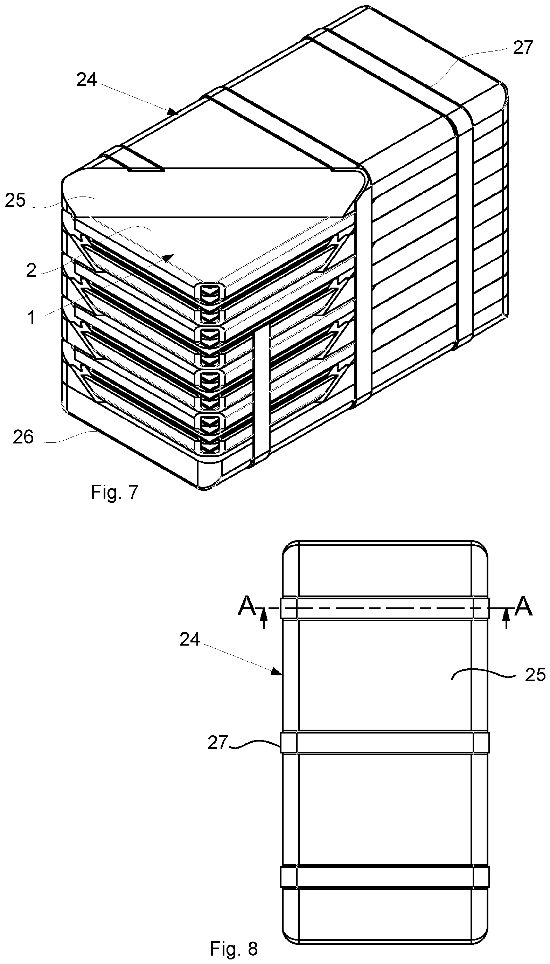

Figs. 7-8 show an example of a battery 24 according to the invention. In this specific embodiment, the battery modules 1 of the battery 24 have a design corresponding to the design shown in figs. 1-3, but it should be understood that alternative battery module designs, for example using the alternative designs of the casings shown in figs. 5 and 6, are also conceivable. In the embodiment shown, the battery modules 1 are connected in series, meaning that a first metal plate 4 forming a positive terminal of one battery module is in direction contact with a second metal plate 5 forming a negative terminal of a neighbouring battery module. Should a pair of neighbouring battery modules instead be connected in parallel, a sheet of electrically isolating material, preferably a polymer is positioned between the adjacent metal plates of the battery modules. The outermost metal plates 4, 5 of said stack are covered by an electrically isolating element 25, 26. There is provided a clamping element 27 that holds the stack of battery modules together. The clamping element 27 is formed by a plurality of straps wound around the battery 24 and the electrically isolating elements 25, 26.

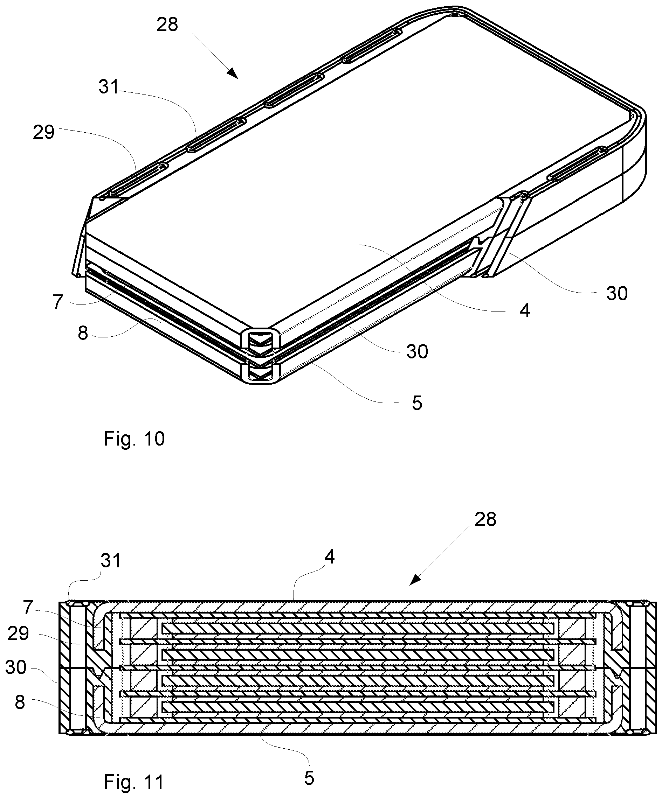

Figs. 10 and 11 show a further embodiment of a battery modul casing, in which the battery module casing, here denoted with 28, comprises channels 29 provided in the lateral wall 30 of the battery module casing 28 for active cooling of the lateral extensions 7, 8 of the metal plates 4, 5 thereof. Any suitable cooling medium may be conducted through the cooling channels for the purpose of adding cooling capability to the battery module casing 28. In the embodient shown in figs. 10 and 11 therer is also provided a sealing element 31 on an upper surface of the lateral wall 30 that will prevent liquid or gas from escaping from the exterior or from the cooling channels 29 into an interface between the metal plates of neighbouring battery modules in a battery or into an interface between a metal plate of a battery module casing and an electrically isolating sheet applied thereon. The sealing element 31 extends around openings of the cooling channels 29, and around the periphery of the respective metal plate 4, 5. The provision of sealing elements 29 is not restricted only to embodiments including cooling channels, but could be implemented on any embodiment of the battery module casing according to the present invention. The sealing element 31 should be thin enough not to prevent good contact between adjacent metal plates of neighbouring battery module casings in a battery. The sealing element may, for example, be applied by means of screen printing.

## Claims

1. A battery module casing (2, 15, 19) configured to house at least one battery cell (3), said battery module casing (2, 15, 19) comprising
- a first metal plate (4), configured to form a positive terminal of a battery module and to be positioned on a first side of said at least one battery cell (3),
- a second metal plate (5), configured to form a negative terminal of a battery module and to be positioned on an opposite second side of said at least one battery cell (3),
- a lateral wall element (6) configured to extend around a lateral periphery of said at least one battery cell (3), wherein the lateral wall element (6) is located between said first metal plate (4) and said second metal plate (5), and wherein said lateral wall element (6) comprises an electrically isolating material and is sealingly attached to the first metal plate (4) and to the second metal plate (5) respectively, wherein at least one of said first and second metal plates (4, 5) comprises at least one lateral extension (7, 8) that, along at least a part of a periphery of the plate to which it is associated, forms a lateral wall (9) together with said lateral wall element (6), said battery module being **characterised in that** the casing (2) is subdivided in two halves (2', 2") that are interconnected along a partition line (10), wherein a first one (2') of said halves comprises the first metal plate (4) and a first part (6') of said lateral wall element (6) and the second one (2") of said halves comprises the second metal plate (5) and a second part (6") of said lateral wall element (6), and **in that** the first part (6') of the lateral wall element (6) is a polymer moulded onto and enclosing the at least one lateral extension (7) of the first metal plate (4), and that the second part (6") of the lateral wall element (6) is a polymer moulded onto and enclosing the at least one lateral extension (8) of the second metal plate (5).

2. A battery module casing (2, 15, 19) according to claim 1, **characterised in that** said at least one lateral extension (7, 8) extends along at least 10%, preferably at least 25%, of the length of said periphery of said first or second metal plate (5) to which it is associated.

3. A battery module casing (2) according to claim 1 or 2, **characterised in that** said at least one lateral extension extends along more than 75% of the length of said periphery of said first or second metal plate (5) to which it is associated

4. A battery module casing (2, 15, 19) according to claim 1, **characterised in that** there is provided a plurality of lateral extensions (7, 8) and that said lateral extensions (7, 8) are evenly distributed along said periphery of said first or second metal plate (4, 5) to which they are associated.

5. A battery module casing (2, 15, 19) according to any one of claims 1-4, **characterised in that** the lateral wall (9) has a lateral area Atot and that said at least one lateral extension (7, 8) extends over a lateral area A1, which is at least 10% of the lateral area Atot of the lateral wall (9).

6. A battery module casing (2, 15, 19) according to any one of claims 1-5, **characterised in that** the first metal plate (4) is provided with at least one lateral extension (7) and that the second metal plate (5) is provided with at least one lateral extension (8).

7. A battery module casing (2, 15, 19) according to claim 5 and claim 6, **characterised in that** the lateral area A1 of the at least one lateral extension (7) of the first metal plate (4) corresponds to the lateral area A1 of the at least one lateral extension (8) of the second metal plate (5).

8. A battery module casing (2, 15, 19) according to claim 6 or 7, **characterised in that** the first metal plate (4) and the at least one lateral extension (7) thereof have same shape and size as the second metal plate (5) and the at least one lateral extension (8) thereof.

9. A battery module casing (2) according to any one of claims 1-8, **characterised in that** the at least one lateral extension (7) of the first metal plate (4) extends with a constant width along the periphery of the first metal plate (4), and that the at least one lateral extension (8) of the second metal plate (5) extends with a constant width along the periphery of the second metal plate (5), and that the lateral extension (7) of the first metal plate (4) presents a free end which is located opposite to a free end of the lateral extension (8) of the second metal plate (5), and that these free ends are divided by a section of said wall element (6).

10. A battery module casing (15, 19) according to any one of claims 1-8, **characterised in that** a plurality of lateral extensions (16, 20) extend from the first metal plate (4) along the periphery thereof, and that a corresponding plurality of lateral extensions (17, 21) extend from the second metal plate (5) along the periphery thereof, and that the lateral extensions (16, 20) of the first metal plate (4) are displaced in peripheral direction relative the lateral extensions (17, 21) of the second metal plate (5) and that the lateral extensions (16, 20) of the first metal plate (4) extend in between the lateral extensions (17, 21) of the second metal plate (5).

11. A battery module casing according to any one of claims 1-10, **characterised in that** said at least one lateral extension (7, 8) is provided with a least one through hole (11).

12. A battery module (1) comprising at least one battery cell (3) and **characterised in that** the at least one battery cell (3) is housed in a battery module casing (2, 15, 19) according to any one of claims 1-11 and that the first metal plate (4) forms a positive terminal of the battery module (1) and the second metal plate (5) forms a negative terminal of the battery module (1).

13. A battery (24), **characterised in that** it comprises one battery module (1) according to claim 12 or a stack of at least two battery modules (1) according to claim 12, wherein, in said stack, the second metal plate (5) of a first of said battery modules is turned towards and located opposite to a first metal plate (4) of a second of said battery modules, and that the outermost metal plates of said one battery module or said stack are covered by an electrically isolating element (25, 26), and that there is provided a clamping element (27) that holds the one battery module or stack of battery modules together.

## Patentansprüche

1. Batteriemodulgehäuse (2, 15, 19), das zur Aufnahme mindestens einer Batteriezelle (3) ausgelegt ist, wobei das Batteriemodulgehäuse (2, 15, 19) umfasst
- eine erste Metallplatte (4), die dazu ausgelegt ist, einen positiven Anschluss eines Batteriemoduls zu bilden und auf einer ersten Seite der mindestens einen Batteriezelle (3) positioniert zu werden,
- eine zweite Metallplatte (5), die dazu ausgelegt ist, einen negativen Anschluss eines Batteriemoduls zu bilden und auf einer entgegengesetzten zweiten Seite der mindestens einen Batteriezelle (3) positioniert zu werden,
- ein Seitenwandelement (6), das so ausgelegt ist, dass es sich um einen seitlichen Umfang der mindestens einen Batteriezelle (3) erstreckt, wobei das Seitenwandelement (6) zwischen der ersten Metallplatte (4) und der zweiten Metallplatte (5) angeordnet ist, und wobei das Seitenwandelement (6) ein elektrisch isolierendes Material umfasst und dichtend an der ersten Metallplatte (4) bzw. an der zweiten Metallplatte (5) befestigt ist, wobei mindestens eine der ersten und zweiten Metallplatte (4, 5) mindestens eine seitliche Verlängerung (7, 8) umfasst, die entlang zumindest eines Teils eines Umfangs der Platte, der sie zugeordnet ist, zusammen mit dem Seitenwandelement (6) eine Seitenwand (9) bildet, wobei das Batteriemodul **dadurch gekennzeichnet ist, dass** das Gehäuse (2) in zwei entlang einer Trennlinie (10) miteinander verbundene Hälften (2', 2") untergliedert ist, wobei eine erste (2') der Hälften die erste Metallplatte (4) und einen ersten Teil (6') des Seitenwandelements (6) umfasst, und die zweite (2") der Hälften die zweite Metallplatte (5) und einen zweiten Teil (6") des Seitenwandelements (6) umfasst, und dass der erste Teil (6') des Seitenwandelements (6) ein an der mindestens einen seitlichen Verlängerung (7) der ersten Metallplatte (4) angeformtes und diese umgebendes Polymer ist, und dass der zweite Teil (6") des Seitenwandelements (6) ein an der mindestens einen seitlichen Verlängerung (8) der zweiten Metallplatte (5) angeformtes und diese umgebendes Polymer ist.

2. Batteriemodulgehäuse (2, 15, 19) nach Anspruch 1,
**dadurch gekennzeichnet, dass** die mindestens eine seitliche Verlängerung (7, 8) sich entlang mindestens 10 %, vorzugsweise mindestens 25 %, der Länge des Umfangs der ersten oder zweiten Metallplatte (5), denen sie zugeordnet ist, erstreckt.

3. Batteriemodulgehäuse (2) nach Anspruch 1 oder 2,
**dadurch gekennzeichnet, dass** die mindestens eine seitliche Verlängerung sich entlang mehr als 75 % der Länge des Umfangs der ersten oder zweiten Metallplatte (5), denen sie zugeordnet ist, erstreckt.

4. Batteriemodulgehäuse (2, 15, 19) nach Anspruch 1,
**dadurch gekennzeichnet, dass** eine Vielzahl von seitlichen Verlängerungen (7, 8) vorgesehen ist, und dass die seitlichen Verlängerungen (7, 8) entlang des Umfangs der ersten oder zweiten Metallplatte (4, 5), denen sie zugeordnet sind, gleichmäßig verteilt sind.

5. Batteriemodulgehäuse (2, 15, 19) nach einem der Ansprüche 1-4,
**dadurch gekennzeichnet, dass** die Seitenwand (9) einen seitlichen Bereich Atot aufweist und dass die mindestens eine seitliche Verlängerung (7, 8) sich über einen seitlichen Bereich A1 erstreckt, welcher mindestens 10 % des seitlichen Bereichs Atot der Seitenwand (9) beträgt.

6. Batteriemodulgehäuse (2, 15, 19) nach einem der Ansprüche 1-5,
**dadurch gekennzeichnet, dass** die erste Metallplatte (4) mit mindestens einer seitlichen Verlängerung (7) versehen ist, und dass die zweite Metallplatte (5) mit mindestens einer seitlichen Verlängerung (8) versehen ist.

7. Batteriemodulgehäuse (2, 15, 19) nach Anspruch 5 und Anspruch 6,
**dadurch gekennzeichnet, dass** der seitliche Bereich A1 der mindestens einen seitlichen Verlängerung (7) der ersten Metallplatte (4) dem seitlichen Bereich A1 der mindestens einen seitlichen Verlängerung (8) der zweiten Metallplatte (5) entspricht.

8. Batteriemodulgehäuse (2, 15, 19) nach Anspruch 6 oder 7,
**dadurch gekennzeichnet, dass** die erste Metallplatte (4) und deren mindestens eine seitliche Verlängerung (7) die gleiche Form und Größe wie die zweite Metallplatte (5) und deren mindestens eine seitliche Verlängerung (8) aufweisen.

9. Batteriemodulgehäuse (2) nach einem der Ansprüche 1-8,
**dadurch gekennzeichnet, dass** die mindestens eine seitliche Verlängerung (7) der ersten Metallplatte (4) sich mit einer konstanten Breite entlang des Umfangs der ersten Metallplatte (4) erstreckt, und dass die mindestens eine seitliche Verlängerung (8) der zweiten Metallplatte (5) mit einer konstanten Breite sich entlang des Umfangs der zweiten Metallplatte (5) erstreckt, und dass die seitliche Verlängerung (7) der ersten Metallplatte (4) ein einem freien Ende der seitlichen Verlängerung (8) der zweiten Metallplatte (5) gegenüberliegend angeordnetes freies Ende darstellt, und dass diese freien Enden durch einen Abschnitt des Wandelements (6) getrennt sind.

10. Batteriemodulgehäuse (15, 19) nach einem der Ansprüche 1-8,
**dadurch gekennzeichnet, dass** eine Vielzahl von seitlichen Verlängerungen (16, 20) sich von der ersten Metallplatte (4) entlang des Umfangs davon erstreckt, und dass eine entsprechende Vielzahl von seitlichen Verlängerungen (17, 21) sich von der zweiten Metallplatte (5) entlang des Umfangs davon erstreckt, und dass die seitlichen Verlängerungen (16, 20) der ersten Metallplatte (4) in Umfangsrichtung relativ zu den seitlichen Verlängerungen (17, 21) der zweiten Metallplatte (5) verschoben sind, und dass die seitlichen Verlängerungen (16, 20) der ersten Metallplatte (4) sich zwischen den seitlichen Verlängerungen (17, 21) der zweiten Metallplatte (5) erstrecken.

11. Batteriemodulgehäuse nach einem der Ansprüche 1-10,
**dadurch gekennzeichnet, dass** die zumindest eine seitliche Verlängerung (7, 8) mit mindestens einem Durchgangsloch (11) versehen ist.

12. Batteriemodul (1) umfassend mindestens eine Batteriezelle (3) und **dadurch gekennzeichnet, dass** die mindestens eine Batteriezelle (3) in einem Batteriemodulgehäuse (2, 15, 19) nach einem der Ansprüche 1-11 untergebracht ist, und dass die erste Metallplatte (4) einen positiven Anschluss des Batteriemoduls (1) bildet, und die zweite Metallplatte (5) einen negativen Anschluss des Batteriemoduls (1) bildet.

13. Batterie (24), **dadurch gekennzeichnet, dass** sie ein Batteriemodul (1) nach Anspruch 12 oder einen Stapel mindestens zweier Batteriemodule (1) nach Anspruch 12 umfasst, wobei im Stapel die zweite Metallplatte (5) eines ersten der Batteriemodule zu einer ersten Metallplatte (4) eines zweiten der Batteriemodule hin gedreht und dieser gegenüberliegend angeordnet ist, und dass die äußersten Metallplatten des einen Batteriemoduls oder des Stapels durch ein elektrisch isolierendes Element (25, 26) abgedeckt sind, und dass ein das eine Batteriemodul oder den Stapel von Batteriemodulen zusammenhaltendes Klemmelement (27) vorgesehen ist.

## Revendications

1. Boîtier de module de batterie (2, 15, 19) configuré pour loger au moins une cellule de batterie (3), ledit boîtier de module de batterie (2, 15, 19) comprenant
- une première plaque métallique (4) configurée pour former une borne positive d'un module de batterie et pour être positionnée sur un premier côté de ladite au moins une cellule de batterie (3),
- une deuxième plaque métallique (5) configurée pour former une borne négative d'un module de batterie et pour être positionnée sur un deuxième côté opposé de ladite au moins une cellule de batterie (3),
- un élément de paroi latérale (6) configuré pour s'étendre autour d'une périphérie latérale de ladite au moins une cellule de batterie (3), dans lequel l'élément de paroi latérale (6) est situé entre ladite une première plaque métallique (4) et ladite deuxième plaque métallique (5), et dans lequel ledit élément de paroi latérale (6) comprend un matériau électriquement isolant et est fixé de manière étanche respectivement à la première plaque métallique (4) et à la deuxième plaque métallique (5), dans lequel au moins l'une desdites première et deuxième plaques métalliques (4, 5) comprend au moins une extension latérale (7, 8) qui, le long d'au moins une partie de la périphérie de la plaque à laquelle elle est associée, forme une paroi latérale (9) avec ledit élément de paroi latérale (6), ledit boîtier de module de batterie étant **caractérisé en ce que** le boîtier (2) est subdivisé en deux moitiés (2', 2") qui sont inter-connectées le long d'une ligne de séparation (10), dans lequel une première moitié (2') desdites moitiés comprend la première plaque métallique (4) et une première partie (6') dudit élément de paroi latérale (6), et la deuxième moitié (2") desdites moitiés comprend la deuxième plaque métallique (5) et une deuxième partie (6") dudit élément de paroi latérale (6), et **en ce que** la première partie (6') de l'élément de paroi latérale (6) est un polymère moulé sur et enfermant l'au moins une extension latérale (7) de la première plaque métallique (4), et que la deuxième partie (6") de l'élément de paroi latérale (6) est un polymère moulé sur et enfermant l'au moins une extension latérale (8) de la deuxième plaque métallique (5).

2. Boîtier de module de batterie (2, 15, 19) selon la revendication 1, **caractérisé en ce que** ladite au moins une extension latérale (7, 8) s'étend sur au moins 10%, de préférence au moins 25%, de la longueur de ladite périphérie de ladite première ou deuxième plaque métallique (5) à laquelle elle est associée.

3. Boîtier de module de batterie (2) selon la revendication 1 ou 2, **caractérisé en ce que** ladite au moins une extension latérale s'étend sur plus de 75% de la longueur de ladite périphérie de ladite première ou deuxième plaque métallique (5) à laquelle elle est associée.

4. Boîtier de module de batterie (2, 15, 19) selon la revendication 1, **caractérisé en ce qu'**il est prévu une pluralité d'extensions latérales (7, 8), et que lesdites extensions latérales (7, 8) sont uniformément réparties le long de ladite périphérie de ladite première ou deuxième plaque métallique (4, 5) à laquelle elles sont associées.

5. Boîtier de module de batterie (2, 15, 19) selon l'une quelconque des revendications 1 à 4, **caractérisé en ce que** la paroi latérale (9) présente une zone latérale Atot, et que ladite au moins une extension latérale (7, 8) s'étend sur une zone latérale A1 qui est au moins 10% de la zone latérale Atot de la paroi latérale (9).

6. Boîtier de module de batterie (2, 15, 19) selon l'une quelconque des revendications 1 à 5, **caractérisé en ce que** la première plaque métallique (4) est pourvue d'au moins une extension latérale (7), et que la deuxième plaque métallique (5) est pourvue d'au moins une extension latérale (8).

7. Boîtier de module de batterie (2, 15, 19) selon la revendication 5 et la revendication 6, **caractérisé en ce que** la zone latérale A1 de l'au moins une extension latérale (7) de la première plaque métallique (4) correspond à la zone latérale A1 de l'au moins une extension latérale (8) de la deuxième plaque métallique (5).

8. Boîtier de module de batterie (2, 15, 19) selon la revendication 6 ou 7, **caractérisé en ce que** la première plaque métallique (4) et son au moins une extension latérale (7) ont la même forme et les mêmes dimensions que la deuxième plaque métallique (5) et son au moins une extension latérale (8).

9. Boîtier de module de batterie (2) selon l'une quelconque des revendications 1 à 8, **caractérisé en ce que** l'au moins une extension latérale (7) de la première plaque métallique (4) s'étend avec une largeur constante le long de la périphérie de la première plaque métallique (4), et que l'au moins une extension latérale (8) de la deuxième plaque métallique (5) s'étend avec une largeur constante le long de la périphérie de la deuxième plaque métallique (5), et que l'extension latérale (7) de la première plaque métallique (4) présente une extrémité libre qui est située à l'opposé d'une extrémité libre de l'extension latérale (8) de la deuxième plaque métallique (5), et que ces extrémités libres sont divisées par une section dudit élément de paroi (6).

10. Boîtier de module de batterie (15, 19) selon l'une quelconque des revendications 1 à 8, **caractérisé en ce qu'**une pluralité d'extensions latérales (16, 20) s'étendent depuis la première plaque métallique (4) le long de sa périphérie, et qu'une pluralité correspondante d'extensions latérales (17, 21) s'étendent depuis la deuxième plaque métallique (5) le long de sa périphérie, et que les extensions latérales (16, 20) de la première plaque métallique (4) sont déplacées dans la direction périphérique par rapport aux extensions latérales (17, 21) de la deuxième plaque métallique (5), et que les extensions latérales (16, 20) de la première plaque métallique (4) s'étendent entre les extensions latérales (17, 21) de la deuxième plaque métallique (5).

11. Boîtier de module de batterie selon l'une quelconque des revendications 1 à 10, **caractérisé en ce que** ladite au moins une extension latérale (7, 8) est pourvue d'au moins un trou traversant (11).

12. Module de batterie (1) comprenant au moins une cellule de batterie (3) et **caractérisé en ce que** l'au moins une cellule de batterie (3) est logée dans un boîtier de module de batterie (2, 15, 19) selon l'une quelconque des revendications 1 à 11, et que la première plaque métallique (4) forme une borne positive du module de batterie (1) et la deuxième plaque métallique (5) forme une borne négative du module de batterie (1).

13. Batterie (24), **caractérisée en ce qu'**elle comprend un module de batterie (1) selon la revendication 12 ou une pile d'au moins deux modules de batterie (1) selon la revendication 12, dans laquelle, dans ladite pile, la deuxième plaque métallique (5) d'un premier module desdits modules de batterie est tournée vers et située à l'opposé d'une première plaque métallique (4) d'un deuxième module desdits modules de batterie, et que les plaques métalliques les plus à l'extérieur dudit module de batterie ou de ladite pile sont recouvertes d'un élément électriquement isolant (25, 26), et qu'il est prévu un élément de serrage (27) qui maintient le module de batterie ou la pile de modules de batterie ensemble.
